# EUROPÄISCHE PATENTSCHRIFT

(11) **EP 1 430 697 B1**
(45) Veröffentlichungstag und Bekanntmachung des Hinweises auf die Patenterteilung: **26.10.2005**
(21) Anmeldenummer: 02751066.8
(22) Anmeldetag: 24.06.2002
(51) Int. Cl.: H04M 1/00

(54) **VERFAHREN ZUM ÜBERTRAGEN VON DATEN**
METHOD FOR TRANSMITTING DATA
PROCEDE DE TRANSFERT DE DONNEES

(30) Priorität: 25.06.2001 DE 10130537; 19.10.2001 DE 10151743; 11.04.2002 EP 02008315
(43) Veröffentlichungstag der Anmeldung: 23.06.2004
(73) Patentinhaber: SIEMENS AKTIENGESELLSCHAFT, 80333 München (DE)
(72) Erfinder: LAUMEN, Josef, 31141 Hildesheim (DE); SCHMIDT, Andreas, 38114 Braunschweig (DE); TRAUBERG, Markus, 38159 Velchede (DE); VAN NIEKERK, Sabine, 38228 Salzgitter (DE); JERBI, Belhassen, 81825 München (DE)
(86) Internationale Anmeldenummer: PCT/EP2002/006973
(87) Internationale Veröffentlichungsnummer: WO 2003/001769

(56) Entgegenhaltungen:
- EP-A- 1 120 945
- WO-A-00/41486
- WO-A-98/57474
- DE-A- 19 742 681

## Beschreibung

Die vorliegende Erfindung betrifft ein Verfahren zur Übertragung von Daten zwischen einem Teilnehmerendgerät und zumindest einer Dienstbereitstellungskomponente eines Dienstanbieters über ein Netzwerk, und betrifft insbesondere ein Verfahren, bei dem eine Kommunikationsverbindung zwischen dem Teilnehmerendgerät und einer speziellen Dienstbereitstellungskomponente aufgebaut werden kann, deren Zugangsinformationen beim Verbindungsaufbau von einem dem Teilnehmerendgerät zugeordneten Speichermittel abgefragt werden.

In der Mobilfunktechnologie ist es vorgesehen, mittels zukünftiger Dienste, wie beispielsweise dem Multimedia-Messaging-Service (MMS-Dienst), neue Möglichkeiten der Zurverfügungstellung und Übertragung von Daten zu erschließen. MMS-Inhalte bestehen aus einem oder mehreren Elementen, wie Text, Sprache, Bildern bzw. Videoinformationen, usw. Ein Dienstanbieter für einen dieser zukünftigen Dienste, wie dem MMS-Dienst, wird in vielen Fällen identisch mit dem Netzbetreiber des Mobilfunknetzes sein, wobei es in anderen Fällen jedoch auch möglich ist, dass es Verträge zwischen dem Netzbetreiber und fremden Dienstanbietern geben wird. Da die vom Netzbetreiber verwaltete Luftschnittstelle einen "Flaschenhals" zu den Mobilstationen bzw. den Mobilfunkgeräten der Mobilfunkkunden darstellt, kann der Netzbetreiber eine Gebühr von den Dienstanbietern verlangen. Somit muss sichergestellt sein, dass die Mobilfunkkunden eines Netzbetreibers einen speziellen Dienst, wie den MMS-Dienst oder einen IMS(IMS: Instant Messaging Service bzw. Immediate Messaging Service)-Dienst, nur von einem ganz bestimmten Dienstanbieter bzw. Service-Provider in Anspruch nehmen können. Wenn dies nicht garantiert werden kann, könnten die Mobilfunkkunden zu anderen Service-Providern wechseln, die den gewünschten Dienst zu günstigeren Konditionen anbieten, ohne dabei den Netzbetreiber wechseln zu müssen.

Die Druckschrift EP-A1-1 120 945 offenbart ein Verfahren zur Zuordnung einer Adresse eines datendienstanbietenden Servers zu einer Kommunikationseinrichtung wie einem Mobilfunkgerät, wobei nicht gezeigt ist, für einen bestimmten Dienst eine Mehrzahl von Zugangsadressen für Dienstbereitstellungskomponenten auf einen eingeschränkten Speicherbereich eines Speichermittels vorzusehen.

Die Druckschrift WO-A1-98/57474 offenbart das Vorsehen von feststehenden Lesezeichen auf einer Speicherkarte, um den Zugang nur auf bestimmte eingetragene Dienste einzuschränken, es wird dort aber nicht gezeigt, dass diese feststehenden Lesezeichen in besonderen Speicherbereichen, nämlich solchen mit eingeschränkter Berechtigung für Schreibvorgänge gespeichert werden bzw. wie überprüft wird, dass ein Benutzer lediglich Dienste aufruft, welche den feststehenden Lesezeichen zugeordnet sind.

Das Dokument WO-A2-00/41486 offenbart ein Mobiltelefon, das mit einer Verweistabelle ausgestattet ist, um zu ermöglichen, dass das Mobiltelefon bevorzugte Wege zum Verbinden von ausgehenden Rufen auf der Basis von vorbestimmten Codes in der Verweistabelle auswählt. Jedoch wird nicht gezeigt, Zugangsinformationen für Dienstbereitstellungskomponenten in einem Speicherbereich mit eingeschränkter Berechtigung für Schreibvorgänge in einem Speichermittel zu speichern bzw. wie überprüft werden soll, dass nur solche Bereitstellungskomponenten für einen bestimmten Dienst angesprochen werden, die in dem eingeschränkten Speicherbereich vorgesehen sind.

In Dokument DE-A1-197 42 681 wird ein Mobilfunk-Kommunikationssystem offenbart, bei dem in einer netzwerkseitigen Komponente Teilnehmer-Berechtigungsinformationen abgelegt sind, die dazu dienen, zu überprüfen, ob eine Mobilstation beim Aufbau einer Kommunikationsverbindung eine zulässige Kommunikationsverbindung aufbaut bzw. ob ein zulässiger Zugriff auf eine gewünschte Vermittlungseinrichtung erfolgt. Jedoch wird nicht gezeigt, Zugangsinformationen in einem eingeschränkten Speicherbereich eines Speichermittels vorzusehen, das mit dem Teilnehmerendgerät verbunden ist.

Es ist somit eine Aufgabe der vorliegenden Erfindung, ein Möglichkeit bereitzustellen, einen einem bestimmten Netzbetreiber zugeordneten Mobilfunkkunden auf bestimmte Dienste festzulegen, wobei der Mobilfunkkunde eine gewisse Flexibilität bei der Auswahl der einen Dienst bereitstellenden Dienstanbieter haben soll.

Diese Aufgabe wird durch ein Verfahren gemäß Anspruch 1 und ein Speichermittel gemäß Anspruch 13 gelöst. Vorteilhafte Ausgestaltungen der Erfindung sind Gegenstand der Unteransprüche.

Dabei umfasst ein Verfahren zur Übertragung von Daten zwischen einem Teilnehmerendgerät und zumindest einer Dienstbereitstellungskomponente eines Dienstanbieters, die über ein Netzwerk miteinander verbundenen sind, folgende Schritte. Zunächst werden Zugangsinformationen für die zumindest eine Dienstbereitstellungskomponente in einem Speicherbereich mit eingeschränkter Berechtigung für Schreibvorgänge eines einem Teilnehmer zugeordneten Speichermittels (wie einer SIM-Karte oder einer UICC mit USIM-Modul) gespeichert. Das Speichermittel ist dabei mit dem Teilnehmerendgerät verbunden. In den Zugangsinformationen wird einem bestimmten Dienst eine Mehrzahl an Zugangsadressen für eine Dienstbereitstellungskomponente eines oder mehrerer bestimmter Dienstanbieter zugeordnet.Dieses Speichern kann beispielsweise vom Betreiber des Netzwerks veranlaßt bzw. selbst durchgeführt werden, wobei dann auch eine Zugangsberechtigung bzw. ein Zugangsberechtigungscode für das Netzwerk auf dem Speichermittel vorgesehen sein kann. Nach Auswählen einer Zugangsadresse einer Dienstbereitstellungskomponente, deren Dienst aufgerufen werden soll, wird dann eine Kommunikationsverbindung von dem Teilnehmerendgerät (nur) zu derjenigen/denjenigen Dienstbereitstellungskomponente(n), deren Zugangsinformationen auf dem Speichermittel gespeichert sind, unter Abfragen der gespeicherten Zugangsinformationen, aufgebaut. Das Auswählen einer Dienstbereitstellungskomponente kann ein Auswählen aus einer (beispielsweise vom Teilnehmerendgerät) vorgegebenen Liste von auf dem Speichermittel gespeicherten Zugangsinformationen oder ein Eingeben einer beliebigen Dienstbereitstellungskomponente über eine Benuteroberfläche bzw. eine Tastatur umfassen, wobei vor oder während des Aufbauens einer Kommunikationsverbindung durch Vergleich mit den auf dem Speichermittel gespeicherten Zugangsinformationen überprüft wird, ob die ausgewählte bzw. eingegebene Dienstbereitstellungskomponente zulässig ist.

Gemäß einer vorteilhaften Ausgestaltung umfasst das Netzwerk ein paketvermitteltes Netzwerk, das insbesondere gemäß dem GPRS(GPRS: General Packet Radio Service)- oder dem UMTS(ITMTS: Universal Mobile Telecommunications System)- Standard arbeitet, und werden die Daten dementsprechend in paketvermittelter Form übertragen.

Gemäß einer vorteilhaften Ausgestaltung umfasst ein derartiges paketvermitteltes Netzwerk zum Implementieren eines paketvermittelten Dienstes im wesentlichen zwei Arten von zusammengeschalteten Netzwerkknoten, nämlich mindestens einen Serving GPRS Support Node (SGSN) und mindestens einen Gateway GPRS Support Node (GGSN), die Bestandteil des Kernnetzes, des sog. Core Network, sind.

Gemäß einer weiteren vorteilhaften Ausgestaltung ist die zumindest eine Dienstbereitstellungskomponente eine Komponente bzw. ein Server eines externen PDN(PDN: Packet Data Network = Paketdatennetzwerk), das mit dem oben erwähnten (paketvermittelten) Netzwerk verbunden ist.

Gemäß einer weiteren vorteilhaften Ausgestaltung weisen die Zugangsinformationen eine sogenannte "End-User-Address" bzw. Endbenutzeradresse auf, die die Zugangsadresse der zumindest einen Dienstbereitstellungskomponente umfasst. Die Zugangsadresse kann dabei eine IP(IP: Internet Protocol = Internetprotokoll)-Adresse sein. Insbesondere ist es vorteilhaft, wenn die Zugangsinformationen derart aufgebaut sind, dass einem bestimmten Dienst, wie dem MMS-Dienst oder dem IMS-Dienst, eine bestimmte Auswahl an Zugangsadressen für eine Dienstbereitstellungskomponente eines oder mehrerer bestimmter Dienstanbieter zugeordnet ist.

Mit dem oben beschriebenen Verfahren kann somit einem Mobilfunkkunden bzw. Teilnehmer ein bestimmter Dienstanbieter für einen bestimmten Dienst bzw. für eine bestimmte Applikation fest vorgegeben werden, indem die Zugangsinformationen (vorzugsweise die IP-Adresse der Dienstbereitstellungskomponente des entsprechenden Dienstanbieters) in dem dem Mobilfunkkunden bzw. dessem Endgerät zugeordneten Speichermittel gespeichert wird. Es sei bemerkt, dass die Dienstbereitstellungskomponente eine Rechneranordnung bzw. einen Server des entsprechenden Dienstanbieters umfassen kann.

Bei dem Speichermittel handelt es sich vorteilhafter Weise um eine intelligente Speicherkarte, wie eine SIM(SIM: Subscriber Identity Module = Teilnehmer-Identitätsmodul)-Karte oder eine UICC(UICC: Universal Integrated Circuit Card)-Karte mit einer USIM(USIM: UMTS-Subscriber Identity Module)-Anwendung, die einem Mobilfunkkunden bzw. Teilnehmer zugeordnet ist. Alternativ dazu ist auch die Verwendung einer einfachen (d.h. nicht intelligenten) Speicherkarte, wie beispielsweise MMC (multi-media-card), CF (compact-flash), MemoryStick, usw., als Speichermedium denkbar.

Da die SIM-Karte oder UICC-Karte mit USIM-Anwendung bzw. USIM-Modul in der Regel vom Netzbetreiber bei Vertragsabschluss an dem Mobilfunkkunden ausgegeben wird (aber rechtlich gesehen sein Eigentum bleibt), kann ein Netzbetreiber auf der SIM-Karte oder in dem USIM-Modul die Zugangsinformationen von bestimmten Dienstanbietern (die verschiedene Dienste bereitstellen können) speichern und nach dieser Methode einen bestimmten Dienst sogar von verschiedenen Dienstanbietern zu verschiedenen Preisen auf bestimmte Zielgruppen abgestimmt anbieten. Dabei kann beispielsweise ein IMS-Dienst mit eingeschränkter Funktionalität von einem Dienstanbieter A unter günstigeren Konditionen in Anspruch genommen werden, während ein IMS-Dienst von einem Dienstanbieter B mit voller IMS-Funktionalität zu teureren Konditionen in Anspruch genommen werden kann. Der Mobilfunkteilnehmer erhält dann zwar die Möglichkeit, selbständig zwischen einem der angebotenen Dienste (dem günstigen des Anbieters A oder dem teueren des Anbieters B) auswählen zu können, jedoch nicht, neue Dienste in Anspruch nehmen zu können, die nicht mit seinem Netzbetreiber vereinbart sind. Die auf diese Weise realisierte Dienst-Sperre (Service-Lock) ist eindeutig an einen bestimmten Mobilfunkteilnehmer gebunden, weil die individuellen Zugangsinformationen auf einem Speichermittel, d. h. insbesondere der SIM-Karte oder dem USIM-Modul, das einen bestimmten Mobilfunkteilnehmer zugeordnet ist, abgelegt werden und - nach einer Ausführungsvariante dieser Erfindung - beim Aufbau einer Verbindung bevorzugt (beispielsweise automatisch) benutzt werden.

Da ferner für jeden Dienst Zugangsinformationen, vorzugsweise die entsprechende IP-Zugangsadresse der Dienstbereitstellungskomponente, auf der SIM-Karte oder dem USIM-Modul gespeichert werden, bleibt auch gewährleistet, dass verschiedene Dienste bei unterschiedlichen Dienstanbieter in Anspruch genommen werden können, wie beispielsweise ein MMS-Dienst bei einem Dienstanbieter A und ein IMS-Dienst bei einem Dienstanbieter B. Ein einfacher Wechsel in Bezug eines Dienstes, beispielsweise eines MMS-Dienstes von dem Dienstanbieter A zu dem Dienstanbieter C, der eventuell günstigere MMS-Konditionen bietet, wird dem Mobilfunkteilnehmer bzw. -kunden durch das erfindungsgemäße Verfahren, insbesondere im Fall schreibgeschützter Zugangsinformationen, unmöglich gemacht.

Zusammenfassend kann also gesagt werden, dass gemäß einer vorteilhaften Ausgestaltung eines erfindungsgemäßen Verfahrens a) zunächst beispielsweise ein Netzbetreiber eines Netzwerks auf einem einem Mobilfunkteilnehmer zugeordneten Speichermittel (wie der SIM-Karte oder dem USIM-Modul), auf dem vorteilhafterweise auch eine Zugangsberechtigung für das Netzwerk gespeichert ist, Zugangsinformationen für zumindest eine Dienstbereitstellungskomponente von einem bestimmten Dienstanbieter speichert. Die Speicherung der Zugangsinformationen erfolgt dabei vorteilhafterweise in einem Speicherbereich des Speichermittels mit eingeschränkter Speicherberechtigung bzw. Schreibberechtigung, so dass nur der Netzbetreiber Zugangsinformationen auf dem Speichermittel ändern oder auf diesem speichern kann. Findet die Speicherung der Zugangsinformationen beim bzw. auf Seiten des Netzbetreibers statt, so muss der Teilnehmer, insbesondere Mobilfunkteilnehmer, nach Erhalt des ihm zugeordneten Speichermittels dieses mit seinem Teilnehmerendgerät verbinden. Es ist ferner denkbar, dass der Netzbetreiber die Zugangsinformationen über das Netzwerk in dem Speichermittel vorsieht, das hierbei mit einem entsprechenden (Teilnehmerend-)Gerät, welches für einen Zugang mit dem Netzwerk ausgelegt ist, verbunden ist. b) Für den Fall, dass der Mobilfunkteilnehmer mit dem Netzbetreiber die Verwendung mehrerer Anbieter für einen bestimmten Dienst, wie den MMS-Dienst, vereinbart hat, kann er eine bestimmte der zumindest einen Dienstbereitstellungskomponente auswählen, deren Zugangsinformationen auf dem Speichermittel gespeichert sind. Das Teilnehmerendgerät ist dabei vorteilhafterweise derart ausgelegt, dass es nur eine Auswahl von Dienstbereitstellungskomponenten ermöglicht, deren Zugangsinformationen auf dem Speichermittel gespeichert sind, und keine Eingabe von Zugangsinformationen für neue Dienstbereitstellungskomponenten zulässt. Zu diesem Zweck können beispielsweise die Eingaben für die Aufrufe von Diensten eines Mobilfunkteilnehmers überwacht werden, wobei nur bei einer Übereinstimmung (nach einem Vergleich) mit den im Speichermittel gespeicherten Zugangsinformationen für bestimmte Dienstbereitstellungskomponenten ein entsprechender Dienst aufrufbar ist. Ist nun der (zulässige) Dienst ausgewählt, so wird der Mobilfunkteilnehmer bzw. sein Teilnehmerendgerät unter Verwendung der gespeicherten Zugangsinformationen eine c) Kommunikationsverbindung zu der entsprechenden Dienstbereitstellungskomponente aufbauen. Vorteilhafterweise erfolgt die Auswahl eines Dienstes, in dem der Mobilfunkteilnehmer nur eine Bezeichnung eines Dienstes einschließlich eines bestimmten Dienstanbieters auf einer Benutzeroberfläche des Teilnehmerendgeräts auswählt, wobei dann das Lesen der entsprechenden Zugangsinformationen aus dem Speichermittel sowie der Aufbau der Kommunikationsverbindung zur der entsprechenden Dienstbereitstellungskomponente automatisch, d.h. ohne weiteren Eingriff des Teilnehmers, erfolgt. Auf diese Weise sind für den Mobilfunkteilnehmer nur die mit dem Netzbetreiber vereinbarten Dienste zugänglich, und andere bzw. neue Dienste sind gesperrt.

Betrachtet man den Fall der Anwendung des erfindungsgemäßen Verfahrens auf eine paketvermittelte Datenübertragung, so kann gemäß einer vorteilhaften Ausgestaltung einem oder jedem bestimmten Dienst eine spezifische Paketdatenprotokoll-Typennummer zugeordnet werden, welche den Paketdatenprotokoll-Typ bzw. PDP-Typ festlegt. Allgemein bemerkt erfolgt die Behandlung des PDP-Typs bevorzugt gemäß der aus dem Stand der Technik bekannten Behandlung der bisher üblichen PDP-Typen. Zweck, Aufbau und zur Zeit verfügbare PDP-Typen sind in der Spezifikation 3G TS 23.060 sowie in der 3G TS 24.008 beschrieben. Allgemein dargestellt ist es zum Datenaustausch mit externen Paketdaten-Netzwerken (PDN: Packet Data Networks) notwendig, dass ein Teilnehmerendgerät in Form eines Mobilterminals (auch als Mobilstation oder als "User Equipment" bezeichnet) nach dem Herstellen beispielsweise einer erfolgreichen paketvermittelten Verbindung gemäß dem GPRS-Standard (in der GSM-Architektur; GSM = Global System for Mobile Communication) oder dem UMTS-Standard eine oder mehrere in dem PDN benutze Adressen beantragt, wie beispielsweise eine IP-Adresse für den Fall, dass das PDN ein IP-Netzwerk ist. Diese Adresse nennt man PDP-Adresse. Sie ist entweder statisch oder dynamisch. Im statischen Fall ist die PDP-Adresse einmalig festgelegt, während sie im dynamischen Fall für jede Sitzung neu verteilt wird. Für jede Sitzung bzw. Session wird ein sogenannter PDP-Kontext erzeugt, der die Charakteristika dieser Sitzung beschreibt. Er enthält den PDP-Typ, die der Mobilstation zugeordnete PDP-Adresse, den angeforderten "Quality of Service" (QoS) und die Adresse des GGSN, das als Zugangspunkt zum PDN dient. Dieser PDP-Kontext wird in der Mobilstation bzw. dem User Equipment (UE), dem SGSN und GGSN gespeichert. Mit einem aktivierten PDP-Kontext ist die Mobilstation für das externe PDN "sichtbar" und kann Datenpakete senden und empfangen. Durch Adressenabgleich kann das GGSN Datenpakete zwischen den PDN und den UE übertragen. Ein Teilnehmer kann mehrere aktive PDP-Kontexte gleichzeitig haben.

Insbesondere die Definition eines bestimmten PDP-Typs für einen bestimmten Dienst kann eine für diesen Dienst spezifische Behandlung im paketvermittelten Netzwerk, insbesondere dem Kern-Netzwerk bzw. Core Network, ermöglichen. Betrachtet man beispielsweise einen MMS-Dienst oder einen IMS-Dienst, so bezieht sich die dienstspezifische Behandlung auf beispielsweise MMS/IMS-spezifische Vergebührungsmodelle, eine besondere Behandlung von MMS/IMS-Nachrichten in Überlastsituationen, spezifische MMS/IMS-Routing innerhalb des Kernnetzwerks oder der Aufbau einer PPP(PPP: Point-to-Point-Protocol)/IP-Verbindung für MMS/IMS-Nachrichten über eine Gi-Schnittstelle von einem GGSN zu einem bestimmten Dienst-Server (MMS-Server, IMS-Server, Internet-Server, usw.), welcher über die Endbenutzeradresse in den Zugangsinformationen bestimmt wird. Mittels der Definition eines spezifischen PDP-Typs kann ohne großen Anpassungsaufwand in den Mobilfunk-Netzelementen SGSN und GGSN bzw. bei der Gi-Schnittstelle den beteiligten Netzelementen eine Information zur Verfügung gestellt werden, die es ermöglicht, anhand des spezifischen PDP-Typs zu erkennen, ob über einen PDP-Kontext ein bestimmter Dienst, wie beispielsweise der MMS-Dienst aktiviert wird. Anhand dieser neuen Information wird den Mobilfunk-Netzelementen die Möglichkeit gegeben, eine dienstspezifische Behandlung durchzuführen.

Gemäß einer vorteilhaften Ausgestaltung kann das in dem erfindungsgemäßen Verfahren verwendete Speichermittel, wie bereits oben erwähnt, als eine intelligente Speicherkarte ausgebildet sein. Insbesondere kann die Speicherung der Zugangsinformation in einem strukturierten Speicher der intelligenten Speicherkarte stattfinden. Diese Speicherung der Zugangsinformation kann dabei in einer Elementardatei (EF: Elementary File) vorgenommen werden, wobei es auch möglich ist, die Zugangsinformationen in einer anderen Datei, wie einer Hauptdatei (Master-File) oder einer gewidmeten bzw. reservierten Datei (Dedicated File) zu speichern. Ein Vorteil der Speicherung der Zugangsinformationen auf einer intelligenten Speicherkarte besteht darin, dass ein Wechsel eines Teilnehmerendgeräts jederzeit einfach vollzogen werden kann, indem einfach die Speicherkarte gewechselt bzw. dem einen Teilnehmerendgerät entnommen und in ein anderes Teilnehmerendgerät eingeführt wird. Somit ist der Teilnehmer, insbesondere Mobilfunkkunde, bei der Nutzung seiner Dienste nicht auf ein bestimmtes Teilnehmerendgerät beschränkt.

Gemäß einer weiteren vorteilhaften Ausgestaltung ist das Teilnehmerendgerät als ein Mobilfunkgerät, insbesondere ein Mobiltelefon, ausgebildet, das vorteilhafter Weise nach dem UMTS-Standard oder dem GSM-Standard, vorteilhafterweise in Verbindung mit dem GPRS-Standard, arbeitet. Ein Teilnehmerendgerät kann jedoch jedes beliebige Kommunikationsendgerät (wie einen Computer usw.) umfassen, dem ein benutzerspezifisches Speichermittel zugeordnet werden kann und das über ein Netzwerk mit einer Dienstbereitstellungskomponente eines Dienstanbieters verbindbar ist.

Bevorzugte Ausführungsformen der vorliegenden Erfindung werden nachfolgend Bezug nehmend auf die beiliegenden Zeichnungen näher erläutert. Es zeigen:
Figur 1 eine schematische Netzübersicht paketvermittelter Datendienste mit Anbindung dreier verschiedener Server zur Dienstbereitstellung;
Figur 2 eine vereinfachte Netzübersicht bei paketvermittelten Datendiensten mit Anbindung dreier verschiedener MMS-Server;
Figur 3 eine vereinfachte Netzübersicht bei paketvermittelten Datendiensten mit Anbindung dreier unterschiedlicher Server für unterschiedliche Datendienste;
Figur 4 eine schematische Darstellung einer Mobilstation in Form eines Mobiltelefons gemäß dem GSM- bzw. GPRS-Standard;
Figur 5 eine schematische Darstellung eines User Equipments gemäß dem UMTS-Standard;
Figur 6 eine schematische Abbildung der Organisation einer USIM-Anwendung; und
Figur 7 eine ausführliche Darstellung einer Speicherstruktur zum Speichern von Zugangsinformationen, insbesondere einer IP-Adresse, auf einer USIM-Anwendung.

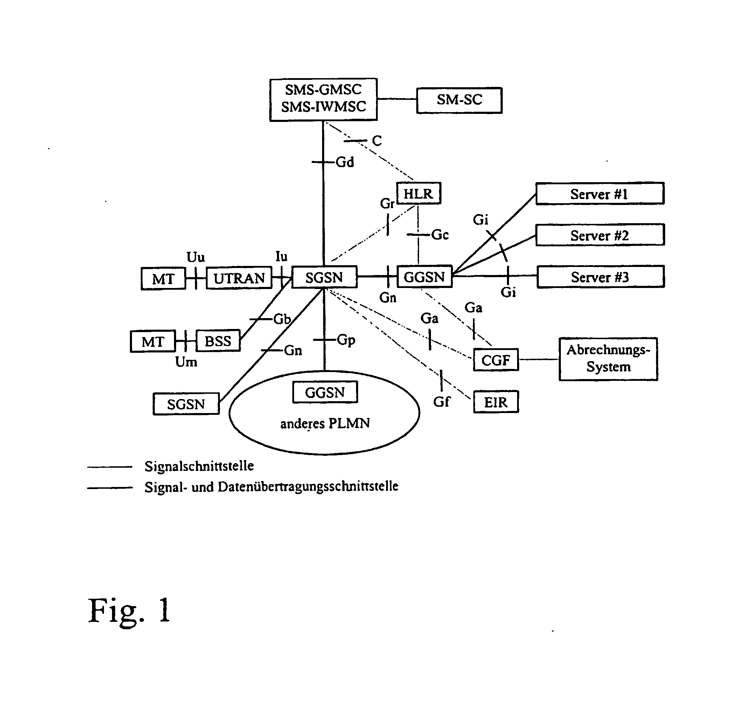

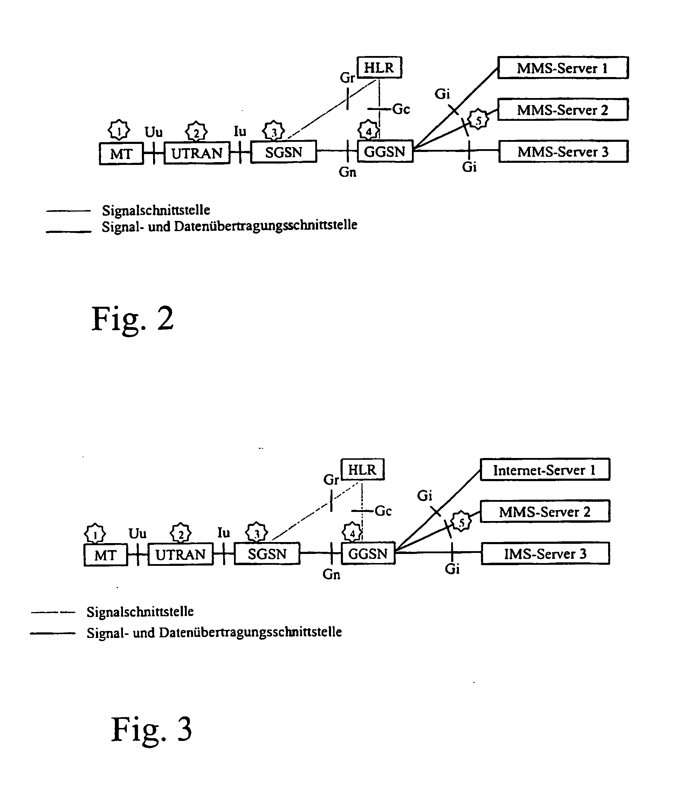

Figur 1 zeigt eine Übersicht über eine Netzstruktur paketvermittelter Datendienste und die Anwendung dreier Server von Dienstanbietern zum Bereitstellen bestimmter Datendienste. Die dargestellte Netzstruktur entspricht im Wesentlichen der Packet-Domain-logischen Architektur, wie sie beispielsweise aus Figur 2 der 3G TS23.060 bekannt ist. Im Folgenden wird nur der für die Erläuterung der vorliegenden Erfindung notwendige Teil der Netzstruktur ausführlich dargestellt, wobei für weitere Details auf die obigen Quellen verwiesen wird.

Je nachdem, nach welchem Standard ein Mobilfunkgerät MT arbeitet, steht es mit einem bestimmten Zugangsnetzwerk in Verbindung. Im Falle des UMTS-Standards steht das Mobilfunkgerät MT über eine Uu-Schnittstelle in Verbindung mit einem UMTS Terrestrial Radio Access Network (UTRAN), d.h. ein terrestrisches Funkzugangsnetzwerk gemäß dem UMTS-Standard, wohingegen es im Falle des GSM/GPRS-Standards über eine Um-Schnittstelle mit einem Basisstationssystem (Basis Station System) BSS in Verbindung steht. Das Mobilfunkgerät MT kann über das UTRAN mittels einer sogenannten Iu-Schnittstelle oder über das BSS mittels einer Gb-Schnittstelle mit dem Kernnetzwerk (Core Network) verbunden werden. Das Kernnetzwerk ist im Wesentlichen mittels zweier Netzwerkknoten implementiert. Dies ist einerseits der Serving GPRS Support Note (SGSN) und andererseits der Gateway GPRS Support Note (GGSN). Der SGSN kann somit eine paketvermittelte Datenübertragung sowohl gemäß dem GSM/GPRS-Standard als auch gemäß dem UMTS-Standard unterstützen. Das SGSN und das GGSN sind über eine Gn-Schnittstelle miteinander verbunden. Wie im unteren Teil von Figur 1 angedeutet ist, kann das SGSN mit weiteren SGSNs oder GGSNs des eigenen Netzes, aber auch anderer Netze (anderer PLMN: Public Land Mobile Network = Landgestütztes Mobilfunknetz) kommunizieren.

Das GGSN kann über eine jeweilige Gi-Schnittstelle mit einem der Server #1, #2 und #3 eine Verbindung aufnehmen. Diese Server #1, #2, #3 sind Bestandteil eines öffentlichen Datennetzwerks (PDN: Public Data Network). Die für einen bestimmten der Server #1, #2 und/oder #3 spezifische PDP(Packet Data Protocol)-Adresse wird durch das PDN evaluiert.

In einem sogenannten Standortverzeichnis oder Home Location Register (HLR) sind üblicher Weise Daten entsprechend den individuellen Daten von einzelnen Teilnehmern und Routing-Informationen enthalten. Hierbei ist das HLR unter Anderem über eine sogenannte Gr-Schnittstelle vom SGSN und über eine sogenannte Gc-Schnittstelle vom GGSN zugänglich.

Im Folgenden soll nun auf Figur 2 Bezug genommen werden, anhand der eine Ausführungsform der Erfindung erläutert wird. Dazu zeigt Figur 2 eine vereinfachte Übersicht einer eben zu Figur 1 erläuterten Netzstruktur, wobei an Stelle der Server #1, #2 und #3 konkret die Server MMS-Server 1, MMS-Server 2 und MMS-Server 3 zur Bereitstellung eines MMS-Dienstes vorgesehen sind. Es sei ferner vorausgesetzt, dass ein Teilnehmer bzw. Mobilfunkkunde ein gemäß dem UMTS-Standard arbeitendes Mobilfunkgerät einschließlich einer ihm zugeordneten UICC-Karte mit USIM-Modul besitzt und einen MMS-Dienst nutzen möchte, wobei er mit seinem Netzbetreiber vertraglich vereinbart hat, nur den Dienst zu nutzen, der von dem den MMS-Server 2 betreibenden Dienstanbieter bereitgestellt wird. Folglich ist auf der USIM-Anwendung der UICC-Karte des Kunden für den MMS-Dienst die Zugangsinformation, insbesondere in der Form einer IP-Adresse, des MMS-Servers 2 abgespeichert. Die dem Mobilfunkteilnehmer bzw. Mobilfunkkunden zugeordnete UICC-Karte mit der USIM-Anwendung ist mit dem Mobilfunkgerät des Mobilfunkteilnehmers verbunden. Es wird nun davon ausgegangen, dass der Mobilfunkteilnehmer einen PDP-Kontext mit einem speziellen PDP-Typ "MMS" in seinem Mobilfunkgerät MT aktiviert (siehe Referenz "1 im Stern). Bei der Aktivierung des PDP-Kontextes vom Typ "MMS" wird automatisch die IP-Adresse des MMS-Servers 2 im Mobilfunkgerät MT in ein MMS-Endbenutzeradressen-Informationselement (MSS End User Address Information Element) des PDP-Typs "MMS" geschrieben und über die Luftschnittstelle UTRAN (siehe Referenz "2" im Stern) zum SGSN (siehe Referenz "3" im Stern) und von da aus weiter zum GGSN (siehe Referenz "4" im Stern) geschickt. Hier findet die Auswertung der MMS-Endbenutzeradresse des PDP-Typs "MMS" statt. Das GGSN baut über die Gi-Schnittstelle eine PPP/IP-Verbindung zum MMS-Server 2 auf, dessen IP-Adresse in der MMS-Endbenutzeradresse des PDP-Typs "MMS" steht (siehe Referenz "5" im Stern). Der Mobilfunkteilnehmer besitzt somit nach dieser Ausführungsvariante des Verfahren keine Möglichkeit, den MMS-Dienst von einem anderen, günstigeren Dienstanbieter in Anspruch zu nehmen. Das beschriebene Verfahren ist auch für andere Dienste, wie den IMS-Dienst analog anwendbar.

Es sei nun auf Figur 3 Bezug genommen, anhand der eine weitere Ausführungsform erläutert wird. Dazu zeigt Figur 3 eine vereinfachte Übersicht einer Netzstruktur, wie sie bezüglich Figur 1 erläutert worden ist, wobei als Kennzeichen dieser Ausführungsform der GGSN paketvermittelte Datenströme von unterschiedlichen Diensten an drei verschiedene Server, nämlich Internet-Server 1, MMS-Server 2 und IMS-Server 3, mit jeweils einer eigenen IP-Adresse weiterleiten kann. Wie die Bezeichnung der jeweiligen Server bereits andeutet, stellt der Internet-Server 1 einen Dienst für das Surfen im Internet bereit, stellt der MMS-Server 2 einen MMS-Dienst bereit und stellt der IMS-Server 3 einen IMS-Dienst bereit. Wiederum hat der Mobilfunkteilnehmer bzw. Mobilfunkkunde mit seinem Netzbetreiber vertraglich vereinbart, beim Nutzen des Internets, eines MMS-Dienstes oder eines IMS-Dienstes den Dienst eines der jeweiligen oben erwähnten Server zu nutzen. Somit werden auf der USIM-Anwendung bzw. dem USIM-Modul der mit dem Mobilfunkgerät MT verbundenen UICC-Karte des Mobilfunkgeräts MT des Mobilfunkteilnehmers für die Nutzung des Internets die IP-Adresse des Internet-Servers 1, für die Nutzung des MMS-Dienstes die IP-Adresse des MMS-Servers 2 und für die Nutzung des IMS-Dienstes die IP-Adresse des IMS-Servers 3 abgespeichert. Je nachdem, welcher Dienst vom Mobilfunkteilnehmer angefragt wird, d. h. welcher PDP-Kontext im Mobilfunkgerät MT aktiviert wird, wird die entsprechende IP-Adresse in das Endbenutzeradressen-Informationselement des entsprechenden PDP-Typs geschrieben. Möchte ein Mobilfunkteilnehmer beispielsweise den MMS-Dienst nutzen, wird bei einer PDP-Kontext-Aktivierung für den MMS-Dienst die in der USIM-Anwendung gespeicherte IP-Adresse des vorgesehenen MMS-Servers 2 in das MMS-Endbenutzeradressen-Informationselement eingetragen (siehe Referenz "1" im Stern) und vom Mobilfunkgerät MT über das UTRAN (siehe Referenz "2" im Stern) an die paketvermittelnden Netzelemente SGSN (siehe Referenz "3" im Stern) und GGSM (siehe Referenz "4" im Stern) des Mobilfunksystems übertragen. Das GGSM kann daraufhin unter Verwendung dieser MMS-Endbenutzeradresse eine PPP/IP-Verbindung zu dem ausgewählten MMS-Server 2 über die Gi-Schnittstelle aufbauen (siehe Referenz "5" im Stern). Das bedeutet, für einen bestimmten Dienst kann der Mobilfunkteilnehmer nur auf einen vorher festgelegten Server zugreifen. Anders ausgedrückt, der Mobilfunkteilnehmer muss in dieser Ausführungsvariante die vom Netzbetreiber in seinem USIM-Modul gespeicherten IP-Adressen nutzen.

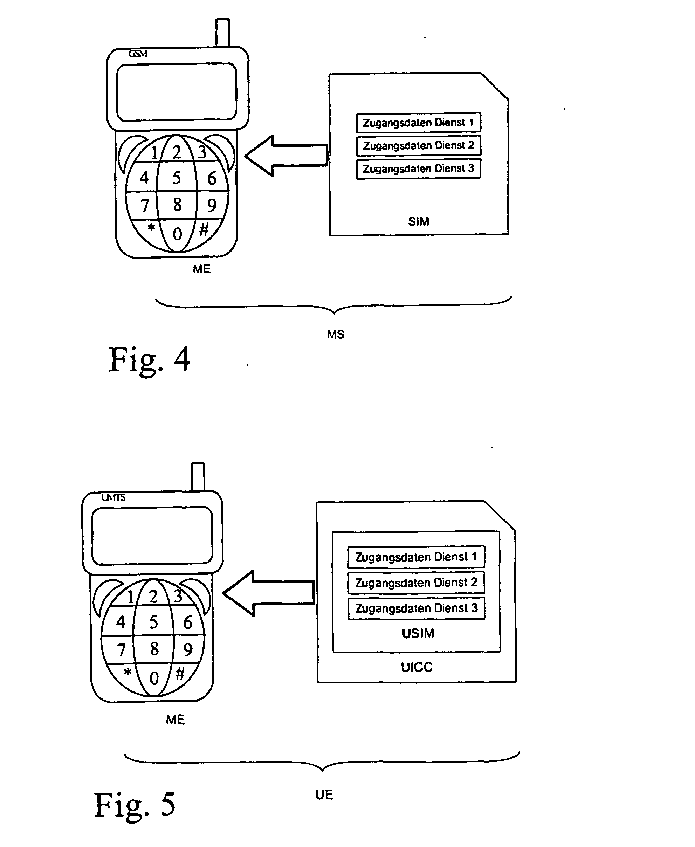

Es sei nun auf Figur 4 verwiesen, in der eine Mobilstation MS, bestehend aus einem Mobiltelefon ME und einer mit diesem verbundenen SIM-Karte dargestellt ist. Gemäß den heutigen 2G-Mobilfunksystemen nach dem GSM-Standard bzw. in 2.5G-Mobilfunksystemen, in denen dieser Standard um GPRS erweitert ist, wird in ein Mobiltelefon ME eine SIM-Karte, die einem bestimmten Mobilfunkteilnehmer bzw. Mobilfunkkunden zugeordnet ist, eingelegt. Ein Mobilfunkteilnehmer, der ein Mobilfunktelefon bzw. Mobilfunkgerät ME hat, das gemäß dem GSM-Standard oder eventuell mit GPRS-Erweiterung arbeitet, und beispielsweise einen Internet-Dienst, einen MMS-Dienst und einen IMS-Dienst nutzen möchte, kann von einem Netzbetreiber eine SIM-Karte beziehen, auf der Zugangsinformationen, insbesondere IP-Adressen, von Servern von Dienstanbietern gespeichert sind, die vom Netzbetreiber festgelegt sind. Betrachtet man das in Figur 3 dargestellte Verfahren, so kann für einen ersten Dienst "Internet" eine IP-Adresse eines Internet-Servers, für einen zweiten Dienst "MMS" eine IP-Adresse eines MMS-Servers und für einen dritten Dienst "IMS" eine IP-Adresse für einen IMS-Server gespeichert werden.

Es sei nun auf Figur 5 verwiesen, in der ein Mobilterminal gemäß dem UMTS-Standard gezeigt ist, welches hier auch als User Equipment UE bezeichnet wird. Dieses User Equipment UE besteht aus einem Mobilfunkgerät bzw. Mobiltelefon ME, das mit einer einem Mobilfunkteilnehmer zugeordneten UICC-Karte verbunden ist, die ein USIM-Modul umfasst. Wie es bezüglich Figur 2 oder 3 bereits erläutert worden ist, können in der USIM-Anwendung Zugangsinformationen bzw. IP-Adressen von Servern gespeichert sein, die von dem Netzbetreiber des Mobilfunkteilnehmers festgelegt werden.

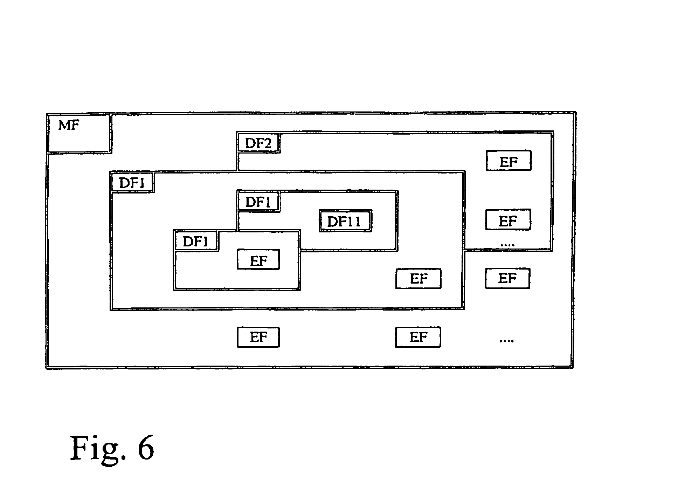

Zum Abspeichern verschiedener Daten bzw. Informationen ist der Speicher einer intelligenten Speicherkarte, wie einer UICC-Karte mit USIM-Modul, in einer hierarchischen Struktur organisiert, die in Figur 6 dargestellt ist. Es sind darin drei verschiedene Typen von Dateien vorhanden, nämlich eine Hauptdatei (Master File) MF, gewidmete bzw. reservierte Dateien (Dedicated Files) DF und Elementardateien (Elementary Files) EF. Diese Dateien können entweder organisations- oder anwendungsspezifisch sein. Ein Betriebssystem organisiert den Zugang zu den in den verschiedenen Dateien gespeicherten Daten bzw. Informationen. Hierin sind auch in an sich bekannter Weise Sicherheitsschranken und Zugangsbeschränkungen bei der Datenauswertung und/oder Änderung der gespeicherten Daten vorgesehen. Insbesondere erfolgt eine Datenfreigabe erst nach Eingabe einer korrekten Identifikationsnummer, wie beispielsweise der PIN (Personal Identification Number = persönliche Identifikations-Nummer).

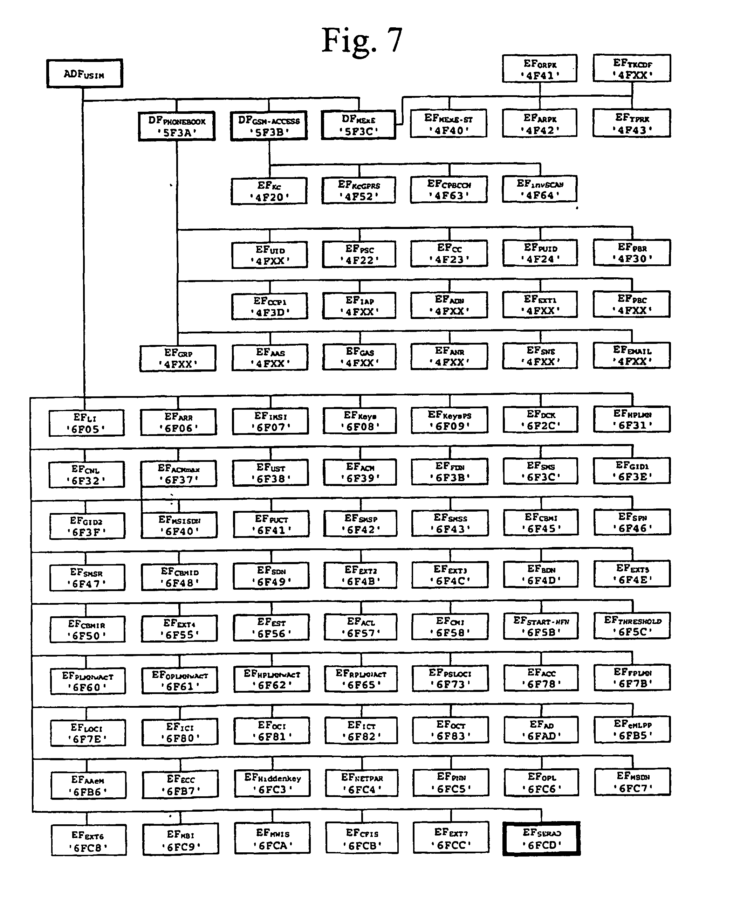

In dem Fall des Speicherns von Zugangsinformationen, insbesondere in der Form einer IP-Adresse, in einer SIM-Karte oder in dem USIM-Modul auf einer UICC-Karte kann die IP-Adresse in einer Elementardatei EF abgespeichert werden. In der Abbildung von Figur 7 ist die Speicherung einer oder mehrerer IP-Adressen in einem USIM-Modul dargestellt. Eine Elementardatei der USIM ist für die IP-Adresse(n) von Servern von Dienstanbietern, die bestimmte Dienste bereitstellen, reserviert. Diese Elementardatei ist im unteren rechten Abschnitt der Abbildung vorgesehen und mit dem Namen EF_{SERAD} (für Elementary File-SERvice ADdress) bezeichnet. Diese Elementardatei könnte beispielsweise mit der Adresse "6FCD" adressiert werden. Durch das Vorsehen von bestimmten Zugangsinformationen für bestimmte Dienste auf der Speicherkarte eines Mobilfunkkunden hat der Netzbetreiber somit die Möglichkeit, den Kunden an bestimmte Dienste von bestimmten Dienstanbietern zu binden.

Besonders vorteilhaft ist dabei eine Ausführungsvariante, bei der die Zugangsinformationen in solchen Speicherbereichen (wie beispielsweise Elementardateien) auf der SIM-Karte oder dem USIM-Modul abgespeichert sind, die vor einem überschreibenden bzw. verändernden Zugriff des Mobilfunkteilnehmers geschützt sind, aber vom Netzbetreiber weiterhin verändert werden können.

## Patentansprüche

1. Verfahren zur Übertragung von Daten zwischen einem Teilnehmerendgerät (MT) und zumindest einer Dienstbereitstellungskomponente (MMS-Server 1, MMS-Server 2, MMS-Server 3; Internet-Server 1, MMS-Server 2, IMS-Server 3) eines Dienstanbieters, die über ein Netzwerk (UTRAN, BBS; SGSN, GGSN) miteinander verbundenen sind, mit folgenden Schritten:
Speichern von Zugangsinformationen für die zumindest eine Dienstbereitstellungskomponente in einem Speicherbereich mit eingeschränkter Berechtigung für Schreibvorgänge eines einem Teilnehmer zugeordneten Speichermittels, das mit dem Teilnehmerendgerät verbunden ist, wobei in den Zugangsinformationen einem bestimmten Dienst eine Mehrzahl an Zugangsadressen für eine Dienstbereitstellungskomponente eines oder mehrerer bestimmter Dienstanbieter zugeordnet wird;
Auswählen einer Zugangsadresse einer Dienstbereitstellungskomponente, deren Dienst aufgerufen werden soll;
Vergleichen, ob die ausgewählte Zugangsadresse mit einer in dem Speicherbereich des Speichermittels gespeicherten Zugangsadresse für den aufzurufenden Dienst übereinstimmt;
Aufbauen einer Kommunikationsverbindung von dem Teilnehmerendgerät zu der ausgewählten Dienstbereitstellungskomponente und Aufrufen des Dienstes bei Übereinstimmung der ausgewählten Zugangsadresse und der in dem Speicherbereich des Speichermittels gespeicherten Zugangsadresse für den aufzurufenden Dienst.

2. Verfahren nach Anspruch 1, bei dem das Netzwerk ein paketvermittelndes Netzwerk (UTRAN; SGSN, GGSN) umfasst und die Daten in paketvermittelter Form übertragen werden.

3. Verfahren nach Anspruch 2, bei dem das paketvermittelte Netzwerk Komponenten aufweist, die gemäß dem "General Paket Radio Service" ("GPRS")- oder dem "Universal Mobile Telecommunications System" ("UMTS")-Standard arbeiten.

4. Verfahren nach einem der Ansprüche 1 bis 3, bei dem die zumindest eine Dienstbereitstellungskomponente (MMS-Server 1, MMS-Server 2, MMS-Server 3; Internet-Server 1, MMS-Server 2, IMS-Server 3) eine Komponente eines externen Paketdatennetzwerks ("PDN") ist, das mit dem Netzwerk verbunden ist.

5. Verfahren nach einem der Ansprüche 1 bis 4, bei dem die Zugangsinformationen eine Endbenutzeradresse aufweisen, die die Zugangsadresse der zumindest einen Dienstbereitstellungskomponente umfasst.

6. Verfahren nach Anspruch 5, bei dem die Zugangsadresse eine Internet-Protokoll-Adresse ist.

7. Verfahren nach einem der Ansprüche 2 bis 6, bei dem jedem Dienst ein spezifischer Paketdatenprotokoll-Typ zugeordnet wird.

8. Verfahren nach einem der Ansprüche 1 bis 7, bei dem als Speichermittel eine einem bestimmten Teilnehmer zugeordnete intelligente Speicherkarte verwendet wird.

9. Verfahren nach Anspruch 8, bei dem die Speicherkarte als eine SIM-Karte oder eine UICC-Karte mit einer USIM-Anwendung ausgebildet wird.

10. Verfahren nach einem Ansprüche 8 oder 9, bei dem die Speicherung der Zugangsinformationen in einem strukturierten Speicher der intelligenten Speicherkarte stattfindet.

11. Verfahren nach Anspruch 10, bei dem die Speicherung der Zugangsinformationen in einer Blementardatei (EF) des strukturierten Speichers vorgenommen wird.

12. Verfahren nach einem der Ansprüche 1 bis 11, bei dem des Teilnehmerendgerät ein Mobilfunkgerät ist, das nach dem UMTS-Standard oder dem GSM-Standard, insbesondere in Verbindung mit dem GPRS-Standard, arbeitet.

13. Speichermittel zum Umsetzen des Verfahrens nach einem der Ansprüche 1 bis 12, das mit einem Teilnehmerendgerät verbindbar ist, wobei das Speichermittel eine Speichereinrichtung aufweist die Zugangsinformationen für zumindest eine Dienstbereitstellungskomponente speichert, welche über ein Netzwerk mit dem Teilnehmerendgerät verbindbar ist, bei dem Speichermittel ist in den Zugangsinformationen einem bestimmten Dienst eine bestimmte Auswahl an Zugangsadressen für eine Dienstbereitstellungskomponente eines oder mehrerer bestimmter Dienstanbieter zugeordnet.

14. Speichermittel nach Anspruch 13, das als eine intellegente Speicherkarte, insbesondere in der Form einer SIM-Karte, eine UICC-Karte mit einer USIM-Anwendung oder als eine Multimediakarte ausgebildet wird.

15. Speichermittel nach Anspruch 13 oder 14, bei dem die Speichereinrichtung nur eine eingeschränkte Berechtigung für Schreibvorgänge von Zugangsinformationen ermöglicht.

## Claims

1. Method for transmitting data between a subscriber terminal (MT) and at least one service providing component (MMS server 1, MMS server 2, MMS server 3; internet server 1, MMS server 2, IMS server 3) of a service provider, which are connected together via a network (UTRAN, BBS; SGSN, GGSN) with the following stages:
Storage of access information for the at least one service providing component in a storage area with restricted authorisation for write processes of a storage means associated with a subscriber, this being linked to the subscriber device, in which in the access information a plurality of access addresses for a service providing component of one or more specific service providers are assigned to a specific service;
Selection of an access address of a service providing component, the service of which is to be requested;
Comparison of whether the selected access address agrees with an access address for the service to be called up, said access address being stored in the storage area of the storage means.
Setting-up of a communication link from the subscriber terminal to the selected service providing component, and calling up the service during agreement of the selected access address and the access address stored in the storage area of the storage means for the service to be called up.

2. Method according to claim 1, in which the network comprises a packet-switching network (UTRAN; SGSN, GGSN) and the data is transmitted in packet-switched form.

3. Method according to claim 2, in which the packet-switched network comprises components which operate according to the General Packet Radio Service (GPRS) or Universal Mobile Telecommunications System (UMTS) standard.

4. Method according to one of claims 1 to 3, in which the at least one service providing component (MMS server 1, MMS server 2, MMS server 3; internet server 1, MMS server 2, IMS server 3) is a component of an external packet data network (PDN) that is connected to the network.

5. Method according to one of claims 1 to 4, in which the access information contains an end-user address, which comprises the access address of the at least one service providing component.

6. Method according to claim 5, in which the access address is an internet protocol address.

7. Method according to one of claims 2 to 6, in which a specific packet data protocol type is associated with each service.

8. Method according to one of claims 1 to 7, in which an intelligent memory card associated with a specific subscriber is used as the storage means.

9. Method according to claim 8, in which the memory card is configured as a SIM card or a UICC card with a USIM application.

10. Method according to one of claims 8 or 9, in which the access information is stored in a structured storage unit of the intelligent memory card.

11. Method according to claim 10, in which the access information is stored in an elementary file (EF) of the structured storage unit.

12. Method according to one of claims 1 to 11, in which the subscriber terminal is a mobile telephone device, which operates according to the UMTS standard or the GSM standard, in particular in conjunction with the GPRS standard.

13. Storage means, in particular for implementing the method according to one of claims 1 to 12, which can be connected to a subscriber terminal, in which the storage means comprises a storage device which stores access information for at least one service providing component, which can be connected to the subscriber terminal via a network, in which storage means a specific selection of access addresses for a service providing component of one or a plurality of service providers is associated with a specific service in the access information.

14. Storage means according to claim 13, which is configured as an intelligent memory card, in particular in the form of a SIM card, a UICC card with a USIM application or as a multimedia card.

15. Storage means according to claim 13 or 14, in which the storage device only allows restricted authorisation for write processes of access information.

## Revendications

1. Procédé de transmission de données entre un terminal d'abonné (MT) et au moins une composante de mise à disposition d'un service (serveur MMS 1, serveur MMS 2, serveur MMS 3; serveur Internet 1, serveur MMS 2, serveur IMS 3) d'un fournisseur de services, lesquels sont interconnectés par l'intermédiaire d'un réseau (UTRAN, BBS; SGSN, GGSN), comprenant les étapes suivantes:
mettre en mémoire des informations d'accès pour l'au moins une composante de mise à disposition d'un service dans une zone de mémoire avec une autorisation limitée pour des opérations d'écriture d'un moyen de mémoire affecté à un abonné, lequel moyen est connecté au terminal d'abonné, une pluralité d'adresses d'accès pour une composante de mise à disposition d'un service d'un ou de plusieurs fournisseurs de services déterminés étant, dans les informations d'accès, affectée à un service déterminé;
sélectionner une adresse d'accès d'une composante de mise à disposition d'un service dont il s'agit d'appeler le service;
comparer si l'adresse d'accès sélectionnée coïncide avec une adresse d'accès pour le service à appeler, enregistrée dans la zone de mémoire du moyen de mémoire;
établir une connexion de communication du terminal d'abonné vers la composante sélectionnée de mise à disposition d'un service et appeler le service si l'adresse d'accès sélectionnée et l'adresse d'accès pour le service à appeler, mise en mémoire dans la zone de mémoire du moyen de mémoire, coïncident.

2. Procédé selon la revendication 1, dans lequel le réseau comprend un réseau à commutation par paquets (UTRAN; SGSN, GGSN) et les données sont transmises sous forme commutée par paquets.

3. Procédé selon la revendication 2, dans lequel le réseau à commutation par paquets comprend des composantes qui opèrent conformément au standard «General Packet Radio Service» (GPRS) ou «Universal Mobile Telecommunications System» (UMTS).

4. Procédé selon l'une des revendications 1 à 3, dans lequel l'au moins une composante de mise à disposition d'un service (serveur MMS 1, serveur MMS 2, serveur MMS 3; serveur Internet 1, serveur MMS 2, serveur IMS 3) est une composante d'un réseau externe de données par paquets (PDN) qui est connecté au réseau.

5. Procédé selon l'une des revendications 1 à 4, dans lequel les informations d'accès comportent une adresse d'utilisateur final qui comprend l'adresse d'accès de l'au moins une composante de mise à disposition d'un service.

6. Procédé selon la revendication 5, dans lequel l'adresse d'accès est une adresse de protocole Internet.

7. Procédé selon l'une des revendications 2 à 6, dans lequel un type spécifique de protocole de données par paquets est affecté à chaque service.

8. Procédé selon l'une des revendications 1 à 7, dans lequel est utilisée, en tant que moyen de mémoire, une carte mémoire intelligente affectée à un abonné déterminé.

9. Procédé selon la revendication 8, dans lequel la carte mémoire est réalisée en tant que carte SIM ou carte UICC avec une application USIM.

10. Procédé selon l'une des revendications 8 ou 9, dans lequel la mise en mémoire des informations d'accès a lieu dans une mémoire structurée de la carte mémoire intelligente.

11. Procédé selon la revendication 10, dans lequel la mise en mémoire des informations d'accès est opérée dans un fichier élémentaire (EF) de la mémoire structurée.

12. Procédé selon l'une des revendications 1 à 11, dans lequel l'appareil d'abonné est un appareil radio mobile qui opère selon le standard UMTS ou le standard GSM, en particulier conjointement avec le standard GPRS.

13. Moyen de mémoire pour mettre en oeuvre le procédé selon l'une des revendications 1 à 12, lequel est connectable à un terminal d'abonné, le moyen de mémoire comportant un dispositif de mémoire qui met en mémoire des informations d'accès pour au moins une composante de mise à disposition d'un service, laquelle est connectable au terminal d'abonné par l'intermédiaire d'un réseau, dans lequel moyen de mémoire une sélection déterminée d'adresses d'accès pour une composante de mise à disposition d'un service d'un ou de plusieurs fournisseurs de services déterminés est affectée à un service déterminé, dans les informations d'accès.

14. Moyen de mémoire selon la revendication 13, lequel est réalisé en tant que carte mémoire intelligente, en particulier sous la forme d'une carte SIM, d'une carte UICC avec une application USIM ou en tant que carte multimédia.

15. Moyen de mémoire selon la revendication 13 ou 14, dans lequel le dispositif de mémoire ne permet qu'une autorisation limitée pour des opérations d'écriture d'informations d'accès.
